# EUROPEAN PATENT APPLICATION

(11) **EP 2 014 796 A1**
(43) Date of publication of application: **14.01.2009**
(21) Application number: 07737350.4
(22) Date of filing: 23.02.2007
(51) Int. Cl.: C23F 1/28

(54) **ETCHING SOLUTIONS, METHOD FOR REGENERATION OF WASTE ETCHING SOLUTIONS AND METHOD FOR THE RECOVERY OF VALUABLE METALS FROM WASTE ETCHING SOLUTIONS**

(30) Priority: 25.04.2006 JP 2006121180
(71) Applicant: Tsurumi Soda Co, Ltd., Tsurumi-ku, Yokohama-shi Kanagawa 230-0045 (JP); TOAGOSEI CO., LTD., Tokyo 105-8419 (JP)
(72) Inventor: NISHIMURA, Yasuo, Kanagawa 230-0045 (JP); KANAYAMA, Nobuo, Kanagawa 230-0045 (JP)
(74) Representative: Betten & Resch
(86) International application number: PCT/JP2007/053411
(87) International publication number: WO 2007/122855

(57) **Abstract**

The present invention provides etching solution for alloy steel such as stainless steel using ferric chloride, in which ferric chloride can be regenerated without carrying out an operation of removing chromium and nickel and while suppressing an increase in the amount of the etching solution, and an etching method using the etching solution.

The etching solution is etching solution comprising ferric chloride and chromium ions or nickel ions, or etching solution comprising ferric chloride, chromium ions and nickel ions and comprising each type of metal ions in a metal composition ratio approximately equal to a metal composition ratio in alloy steel to be etched. The etching method is a method for etching alloy steel with etching solution comprising ferric chloride and comprising each type of metal ions in a metal composition ratio approximately equal to a metal composition ratio in the alloy steel.

## Description

### Technical Field

The present invention relates to etching solution for etching alloy steel containing iron and chromium and/or nickel, for example, ferritic, austenitic and duplex stainless steel, a 36% Ni invar alloy, or a 42% nickel alloy for lead frames. More specifically, the present invention relates to etching solution comprising ferric chloride and chromium ions and/or nickel ions. The present invention also relates to a method for etching alloy steel with the etching solution, a method for regenerating a waste liquid of the etching solution (hereinafter referred to as "etching waste liquid"), and a method for recovering valuable metals from etching the waste liquid.

In recent years, ferric chloride solutions having excellent capability of etching metals have been used for, for example, forming a circuit in a copper foil on a printed wiring board or removing burrs generated on a punched end face of a metal plate (foil) in manufacture of electronic components. As alloy steel such as stainless steel is etched with a ferric chloride solution, large amounts of chromium and nickel are eluted into the etching solution and iron in the alloy steel is also eluted into the etching solution as shown in following reaction formulas (1) to (3), thus reducing etching capability. When ferric chloride in the etching solution is reduced and it becomes impossible to maintain predetermined etching capability, the etching solution is replaced with a new or regenerated solution, and on the other hand, an iron material is added to the used etching solution (etching waste liquid) to precipitate and remove chromium and nickel as shown in following reaction formulas (4) to (5), and then chlorine oxidation shown in reaction formula (6) is carried out to regenerate the etching waste liquid (Patent Document 1).

### Metal elution step

3FeCl₃ + Cr → 3FeCl₂ + CrCl₃ (1)

2FeCl₃ + Ni → 2FeCl₂ + NiCl₂ (2)

2FeCl₃ + Fe → 3FeCl₂ (3)

### Metal recovery step

2CrCl₃ + 6H₂O + 3Fe → 2Cr(OH)₃ + 3FeCl₂ + 3H₂ (4)

NiCl₂ + Fe → Ni + FeCl₂ (5)

### Ferric chloride recovery step (chlorine oxidation)

2FeCl₂ + Cl₂ → 2FeCl₃ (6)

However, since the precipitated chromium compound has inferior filterability in the method for regenerating etching waste liquid with an iron material as described in Patent Document 1, a method comprising generating a flock containing a chromium compound using a polymer flocculant to improve filterability has been devised (Patent Document 2).

There are also known a method comprising optionally blowing chlorine into etching waste liquid containing ferric chloride as a main component and further containing ferrous chloride and nickel chloride to oxidize ferrous chloride in the waste liquid to ferric chloride; then heating and concentrating the waste liquid; subsequently cooling the waste liquid to 10 to 40°C to crystallize and remove ferric chloride and slight amounts of ferrous chloride and nickel chloride; and returning the mother liquid having a reduced nickel chloride content to the etching step to recycle and use the mother liquid (Patent Document 3), and a method comprising adding chlorine gas to an iron chloride etching waste liquid containing nickel to oxidize ferrous chloride to ferric chloride; concentrating the waste liquid so that the specific gravity is 1.6; and then cooling the waste liquid to crystallize and remove nickel chloride (Patent Document 4).

In these methods described in the conventional art for regenerating a ferric chloride solution from etching waste liquid containing ferric chloride as a main component, it is essential to remove chromium and nickel first. Here, ferrous chloride is generated as shown in the above reaction formulas (4) and (5), and the remaining ferric chloride is reacted with added iron maternal (the reaction formula (3)) and converted to ferrous chloride. In addition, as etching proceeds (the reaction formula (3)), ferrous chloride is generated in an amount 1.5 times as much as the amount of ferric chloride. Therefore, in the regeneration step of converting ferrous chloride in the waste liquid to ferric chloride by chlorine blowing, the amount of ferric chloride is considerably increased from the initial amount, and the excess ferric chloride has to be disposed of. In other words, a ferric chloride business using ferric chloride for etching solution is even called "balance business", where it is difficult to balance the excess ferric chloride.
Patent Document 1: Japanese Unexamined Patent Publication No. Sho 62-192588
Patent Document 2: Japanese Unexamined Patent Publication No. Hei 06-127946
Patent Document 3: Japanese Unexamined Patent Publication No. Hei 09-235684
Patent Document 4: Japanese Unexamined Patent Publication No. Hei 10-46370

### Disclosure of the Invention

### Problems to be solved by the invention

An objective of the present invention is to provide etching solution for alloy steel such as stainless steel using ferric chloride, in which ferric chloride can be regenerated without carrying out an operation of removing chromium and nickel by addition of an iron material and while suppressing an increase in the amount of the etching solution. Another objective of the present invention is to provide a method for etching alloy steel with the etching solution of the present invention, a method for regenerating etching waste liquid, and a method for recovering valuable metals forming a composition of alloy steel from etching waste liquid.

### Means for solving the problems

The present invention relates to an invention of etching solution comprising ferric chloride and chromium ions or nickel ions, and an invention of etching solution comprising ferric chloride, chromium ions and nickel ions, which attain the above objective. Preferably, the etching solution comprises ferric chloride and chromium ions and/or nickel ions and comprises each type of metal ions in a metal composition ratio approximately equal to a metal composition ratio in alloy steel to be etched. The etching solution is preferable etching solution comprising 50 to 30 wt% of trivalent iron ions based on ferric chloride and 10 to 50 wt% of chromium ions or nickel ions, and etching solution comprising 50 to 90 wt% of trivalent iron ions based on ferric chloride, and at least 7 wt% each or chromium ions and nickel ions, and comprising 10 to 50 wt% of chromium ions and nickel ions in total, based on a total amount of the trivalent iron ions based on ferric chloride and the chromium ions and/or the nickel ions, and the etching solution further comprising molybdenum ions.

The etching solution preferably further comprises hydrochloric acid.

The present invention also includes a method for etching alloy steel with the above etching solution, or a method for etching alloy steer with etching solution comprising ferric chloride and comprising each type of metal ions in a metal composition ratio approximately equal to a metal composition ratio in the alloy steel.

In the etching method, the etching solution preferably further comprises hydrochloric acid.

The present invention further includes a method for regenerating etching waste liquid, comprising oxidizing ferrous chloride present in the above etching waste liquid to ferric chloride with chlorine or hydrogen peroxide; a method for etching alloy steel with a regenerated etching solution; a method for recovering valuable metals from etching waste liquid, comprising adding a neutralizer to etching waste liquid to precipitate valuable metals and filtering the valuable metals; and a method for recovering valuable metals from etching waste liquid and regenerating the etching waste liquid, comprising adding a neutralizer to a part of the etching waste liquid to precipitate valuable metals and filtering the valuable metals, and oxidizing ferrous chloride present in the remaining part of the etching waste liquid to ferric chloride with chlorine or hydrogen peroxide.

The method for regenerating etching waste liquid, comprising oxidizing to ferric chloride with chlorine or hydrogen peroxide, preferably further comprises adding hydrochloric acid. The method for recovering valuable metals from etching waste liquid and regenerating the etching waste liquid preferably further comprises adding hydrochloric acid to the remaining part of the waste liquid of the etching solution and/or the etching solution after oxidizing the remaining part of the waste liquid.

### Effect of the invention

The present invention includes etching solution comprising ferric chloride and chromium ions or nickel ions, and etching solution comprising ferric chloride, chromium ions and nickel ions, in particular, etching solution using an aqueous ferric chloride solution comprising each type of metal ions in a metal composition ratio approximately equal to a metal composition radio in alloy steel to be etched. Etching of alloy steel with such etching solution has following advantages over etching with a conventional etching solution comprising only ferric chloride.

(1) In conventional regeneration treatment in which an iron material is introduced into etching waste liquid to remove heavy metals such as chromium and nickel and then ferrous chloride is oxidized to ferric chloride with chlorine gas or hydrogen peroxide, the amount of the regenerated etching solution is considerably increased and the increased portion has to be disposed of. However, in the present invention, since it is not necessary to carry out treatment of removing heavy metals using an iron material, the amount of the etching solution is not considerably increased and no waste is generated.
(2) The regeneration of etching waste liquid according to the present invention comprises only steps of oxidizing ferrous chloride to ferric chloride with chlorine or hydrogen peroxide, and adjusting the concentration. Since it is not necessary to carry out an operation of removing heavy metals, the waste liquid is easily recycled.
(3) Since the composition radio of metal ions contained in the etching solution or the etching waste liquid is approximately equal to a composition ratio in alloy steel, heavy metals present in the waste liquid can be recycled as raw material valuable metals for alloy steel.
(4) When hydrochloric acid is further added to the etching solution, a surface film such as a passivation film is highly efficiently removed and thus etching performance is excellent, and it is possible to suppress generation of insoluble matters such as iron hydroxide during etching.

### Brief Description of the Drawings

Figure 1 is a view showing an influence of the temperature and the spray pressure on the etching rate during etching when etching solution of the conventional art and the etching solution of the present invention are used.
Figure 2 is a view illustrating a mass balance in the steps when alloy steel (SUS316 in this case) is etched with the etching solution of the present invention, valuable metals are recovered from a part of the etching waste liquid, and the remaining part of the waste liquid is oxidized with chlorine to regenerate the waste liquid.

### Best Mode for Carrying Out the Invention

The present invention includes etching solution, comprising ferric chloride and chromium ions or nickel ions, and etching solution comprising ferric chloride, chromium ions and nickel ions, specifically, etching solution comprising 50 to 90 wt% of iron ions and 10 to 50 wt% of chromium ions or nickel ions, and etching solution comprising 50 to 90 wt% of iron ions and at least 7 wt% each of chromium ions and nickel ions and comprising 10 to 50 wt% of chromium ions and nickel ions in total, based on a total amount of the trivalent iron ions based on ferric chloride and the chromium ions and/or the nickel ions. That is, in the present invention, alloy steel is etched with an aqueous ferric chloride solution comprising each type of metal ions in a metal composition ratio approximately equal to a metal composition ratio in the alloy steel to be etched.

The "etching" in the present invention includes dissolving a circuit non-forming area in alloy steel according to a circuit pattern, dissolving burrs on a punched end face of alloy steel, or making a surface of alloy steel corrode.

The "etching solution" in the present invention means a new solution comprising ferric chloride and chromium ions and/or nickel ions, or a solution regenerated by oxidizing ferrous chloride in etching waste liquid with chlorine or hydrogen peroxide. As alloy steel is etched, iron, chromium, nickel and the like are eluted into the etching solution of the present invention. On the other hand, since ferric chloride is reduced to ferrous chloride, the metal concentration in the solution is changed over time as etching proceeds. Therefore, the composition of the etching solution is specified in the state of a new solution or after regeneration. Accordingly, the etching solution differs from a solution comprising ferric chloride, ferrous chloride, chromium ions and/or nickel ions as a consequence of elution of chromium, nickel and the like from alloy steel when the alloy steel is etched with a conventional etching solution comprising only ferric chloride.

The "waste liquid of the etching solution" or the "etching waste liquid" in the present invention means a used etching solution which cannot maintain predetermined etching capability after etching alloy steel and thus is to be replaced with a new or regenerated etching solution. The etching solution obtained by regenerating etching waste liquid is preferably etching solution in which ferrous chloride in the etching waste liquid is almost entirely oxidized to ferric chloride, but may be a regenerated etching solution having a small amount of remaining ferrous chloride to the extent that etching capability is not affected, that is, having a ferrous chloride content of 5 wt% or less, preferably 3% or less, and more preferably 1% or less. This is because etching capability is not decreased when the regenerated etching solution has a ferrous chloride content of 5% or less.

The "alloy steel" to be etched with the etching solution of the present invention means a Cr alloy, e.g. ferritic and martensitic stainless steel, a Cr-Ni alloy, e.g. austenitic and duplex stainless steel, and a Ni alloy, e.g. a 36 Ni invar alloy or a 42 Ni alloy for lead frames. That is, the alloy steel contains up to about 30 wt% of Cr and up to about 45 wt% of Ni. The alloy steel may optionally contain metal elements such as Cu, Mo and Co and trace elements such as Nb, V and Ti to satisfy the requirements for applications. Typical examples of the alloy steel include stainless steel such as SUS430, SUS304 or SUS316 standardized by Japanese Industrial Standard (JIS), and a 42% Ni alloy used for lead frames.

The "valuable metal" in the present invention means a metal which is present in etching waste liquid and is a recoverable material for alloy steel, that is, chromium, nickel, molybdenum or the like.

The new etching solution of the present invention is prepared by dissolving ferric chloride and chromium chloride and/or nickel chloride in an aqueous ferric chloride solution. More preferably, the new etching solution is an aqueous solution comprising each type of metal ions in a composition ratio approximately equal to that in alloy steel which is a material to be etched. The fundamental ferric chloride etching solution preferably comprises 18 to 55 wt% of ferric chloride in an aqueous solution. When the content is less than 18 wt%, the content of ferric chloride having high etching capability is reduced, and thus etching capability is decreased and the etching rate is outside the practical range. On the other hand, when the content is more than 55 wt%, viscosity of the etching solution is increased and thus the etching solution must be warmed. This decreases etching workability.

The etching solution "comprising each type of metal ions in a metal composition ratio approximately equal to a metal composition ratio in alloy steel" means etching solution having a composition ratio of iron ions, chromium ions, nickel ions and the like within a range of ±30%, preferably within a range of ±20%, and more preferably within a range of ±10% based on the content of each metal in alloy steel.

The composition of the etching solution of the present invention will be described below. Here, percents by weight in each composition are based on a total amount of trivalent iron ions based on ferric chloride, chromium ions and/or nickel ions in the etching solution unless otherwise specified.

The etching solution of the present invention is a solution comprising trivalent iron ions based on ferric chloride and chromium ions and/or nickel ions, and (1) etching solution comprising 50 to 90 wt% of trivalent iron ions and 10 to 50 wt% of chromium ions, (2) etching solution comprising 50 to 90 wt% of trivalent iron ions and 10 to 50 wt% of nickel ions, or (3) etching solution comprising 50 to 90 wt% of trivalent iron ions and at least 7 wt% each and 10 to 50 wt% in total of chromium ions and nickel ions. The etching solution of the present invention is basically a ferric chloride solution comprising each type of metal ions in a metal composition ratio approximately equal to a mental composition ratio in alloy steel to be etched.

Accordingly, it is preferable to change the composition of the etching solution according to a composition of alloy steel which is a material to be etched. This is because the percentages of ferric chloride, chromium ions and nickel ions are always constant when each composition component in alloy steel is eluted by etching, and thus the etching solution having the same composition can be always supplied, that is, the etching solution having the same etching capability can be easily prepared when the etching solution is recycled. Since a neutralized product of etching waste liquid has the metal composition radio approximately equal to that of alloy steel to be etched, the neutralized product can be reused as raw material for alloy steel and no waste is generated, advantageously.

Accordingly, a Cr alloy which is ferritic stainless steel or martensitic stainless steel is etched preferably with etching solution comprising 50 to 90 wt% of trivalent iron ions and 10 to 50 wt% of chromium ions, and more preferably with etching solution comprising 60 to 90 wt% of trivalent iron ions and 10 to 40 wt% of chromium ions. A 36 Ni invar alloy or a 42 Ni alloy for lead frames is etched preferably with etching solution comprising 50 to 90 wt% of trivalent iron ions and 10 to 50 wt% of nickel ions, and more preferably with etching solution comprising 50 to 70 wt% of trivalent iron ions and 30 to 50 wt% of nickel ions. On the other hands, a Cr-Ni alloy which is represented by austenitic stainless steel or duplex stainless steel is etched preferably with etching solution comprising 50 to 90 wt% of trivalent iron ions and at least 7 wt% each of chromium ions and nickel ions and comprising 10 to 50 wt% of chromium ions and nickel ions in total, and more preferably with etching solution comprising 50 to 75 wt% of trivalent iron ions and at least 8 wt% each of chromium ions and nickel ions and comprising 25 to 50 wt% of chromium ions and nickel ions in total. Further, etching solution comprising molybdenum ions is preferable for stainless steel containing molybdenum, e.g. SUS316.

However, there is no problem in particular in terms of retching performance, even if a metal composition ratio in alloy steel to be etched is not approximately equal to a metal composition ratio in the etching solution, that is, even if a metal composition ratio in the etching solution is outside the range of ±30% based on the content of each composition metal in the alloy steel. This is because chromium and nickel in the etching composition do not particularly affect etching performance, and even if the etching solution having a slightly different composition ratio is used, each composition component in alloy steel is eluted by etching to make percentages of trivalent iron ions, chromium ions and nickel ions respectively closer to the composition ratio in the alloy steel during use.

The etching solution of the present invention preferably further comprises hydrochloric acid. This is because when the etching solution comprises hydrochloric acid, a surface film such as a passivation film is highly efficiently removed and thus etching performance is excellent, and it is possible to suppress generation of insoluble matters such as iron hydroxide during etching. The content of hydrochloric acid in the etching solution comprising ferric chloride and the like is preferably 10 wt% or less, and more preferably 1 to 5 wt% based on the weight of the etching solution.

The present invention also relates to a method for etching alloy steel with the above etching solution of the present invention, and a method for etching alloy steel with a ferric chloride etching solution comprising metal ions in a metal composition ratio approximately equal to a metal composition ratio in the alloy steel.

In the present invention, alloy steel is etched with a ferric chloride solution comprising chromium ions and/or nickel ions. That is, the etching solution of the present invention comprises chromium ions and/or nickel ions that are not affecting the etching rate, from the beginning.

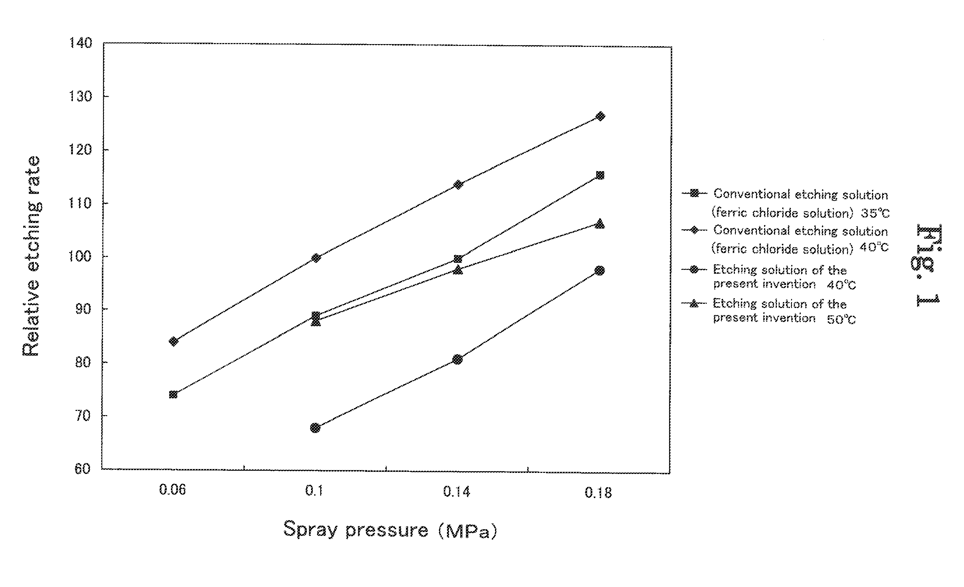

Figure 1 is a view in which the etching solution of the present invention comprising chromium ions and nickel ions in Example 1a described later was compared with a conventional etching solution comprising only ferric chloride (40 degree Baume) in terms of etching rate. Here, the test was carried out by spray etching using a small etching test device having a chemical in an amount of 10 kg. Spraying was carried out from 11 cm above a material to be etched using one full cone type spray nozzle. The material to be etched was a 1 mm-thick 40 nun × 80 mm SUS316L plate. The whole back surface and both edges (5 mm each) of the etching surface were masked and etching was carried out with an effective etching area of 40 mm × 70 mm. The etching rate was indicated as a rate elative to an etching rate determined based on a reduction in weight at a ferric chloride solution temperature of 40°C at a spray pressure of 0.1 MPa as 100.

An etching rate with the etching solution of the present invention comprising hydrochloric acid was also measured by the same method. As a result, the etching solutions of the present invention differing from each other only in the presence or absence of hydrochloric acid were found to have approximately the same etching rate.

As is clear from Figure 1, when the etching temperature and the blowing pressure (spray pressure) of the etching solutions are the same, etching performance of the etching solutions of the present invention is decreased from that of the conventional etching solution comprising only ferric chloride. That is, the condition where the etching solution of the present invention is used at 50°C is approximately equivalent to the condition where the conventional etching solution is used at 35°C. Accordingly, the condition for promoting etching must be set so that the etching solution of the present invention exhibits the same etching performance as that of the conventional etching solution. The condition for promoting etching must also be set so that the etching solution of the present invention comprising hydrochloric acid exhibits the same etching performance as that of the conventional etching solution.

The present invention relates to a method for regenerating etching solution, comprising regenerating ferrous chloride present in etching waste liquid after etching alloy steel with the above etching solution to ferric chloride with chlorine or hydrogen peroxide.

The etching solution can be regenerated as etching solution by blowing chlorine gas to etching waste liquid to oxidize ferrous chloride in the etching waste liquid to ferric chloride as shown in the above formula (6), and then adjusting the ferric chloride concentration. Alternatively, the etching solution can be regenerated as etching solution by oxidizing ferrous chloride in etching waste liquid to ferric chloride with hydrogen peroxide and hydrochloric acid as shown in following formula (7), and then adjusting the ferric chloride concentration.

2FeCl₂ + H₂O₂ + 2HCl → 2FeCl₃ + 2H₂O (7)

In the regeneration of the etching solution, it is preferable to further add hydrochloric acid to the waste liquid or the etching solution. Hydrochloric acid can be added before and/or after oxidizing ferrous chloride to ferric chloride. Hydrochloric acid is preferably added to the etching solution after oxidizing ferrous chloride to ferric chloride, because the concentration in the etching solution can be easily adjusted, for example.

The present invention further relates to a method for recovering valuable metals from etching waste liquid, comprising adding a neutralizer to the etching waste liquid after etching alloy steel with the above etching solution to precipitate valuable metals, and filtering the valuable metals.

Specifically, the valuable metals are recovered from the etching waste liquid by the following method.
An inorganic base as a neutralizer is added to etching waste liquid to precipitate valuable metals such as chromium or nickel. The precipitate is separated by filtration or centrifugation. The precipitate obtained in this manner can be used as raw material of valuable metals for alloy steel or the like. The inorganic base as a neutralizer is not particularly limited insofar as it is alkali metal hydroxide or alkali earth metal hydroxide. In particular, sodium hydroxide or calcium hydroxide is preferable. The pH for generating precipitate is not particularly limited insofar as it is a pH at which valuable metals are precipitated. The pH is preferably pH 8 to 12, more preferably pH 9 to 11.5, and particularly preferably pH 9.5 to 11. The precipitate can be obtained by filtration using common filter paper or centrifugation using a filter cloth.

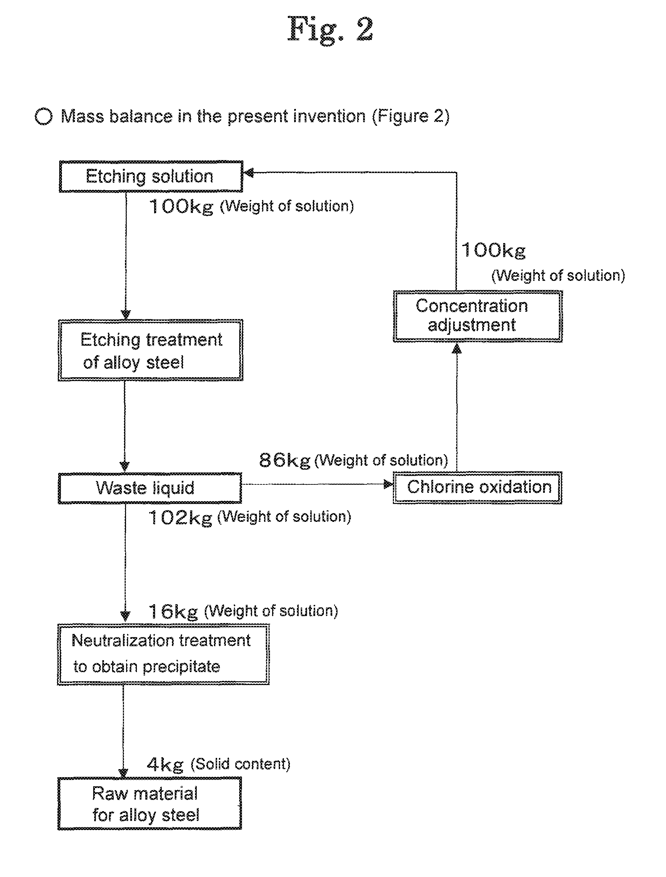

A mass balance as shown in Figure 2 can be illustrated for regeneration of etching waste liquid and recovery of valuable metals from the waste liquid. That is, alloy steel (SUS316) is repeatedly etched with 100 kg of etching solution to obtain etching waste liquid (102 kg) in which 2 kg of SUS316 is dissolved in the etching solution. 16 kg of the etching waste liquid forming a part of the etching waste liquid contains an increased portion by etching of 2 kg of SUS316. 16 kg of the etching waste liquid is then neutralized so that valuable metals such as chromium or nickel can be recovered and used as raw material for alloy steel or the like. Further, 86 kg of the etching waste liquid which is the remaining part of the etching waste liquid is chlorine oxidized to regenerate ferric chloride, and water is added to adjust the ferric chloride concentration, so that 100 kg of the etching solution is regenerated. The regenerated etching solution is equivalent to the etching solution initially used and can be used for etching SUS316. Regeneration was carried out using 86 kg of the etching waste liquid, because the contents of Fe, Ni, Cr and Mo in the etching waste liquid are the same as the contents in the etching solution. Figure 2 illustrates a case where the amount of the regenerated etching solution is 100 kg which is the same as the amount of the initial etching solution; however, as necessary, it is possible to appropriately select the amount of a part of the etching waste liquid for recovering valuable metals and the amount of the remaining part of the etching waste liquid for regenerating the etching solution.

In the illustration of Figure 2, hydrochloric acid can be added to the "etching waste liquid" before oxidizing ferrous chloride to ferric chloride or/and the "etching solution" after oxidizing the remaining part of the waste liquid during the "concentration adjustment".

### Examples

The present invention will be described in detail below with reference to examples; however, the examples are illustration of the present invention and do not limit the scope of the present invention. In the examples, "wt%" represents a percentage by weight based on the weight of the etching solution unless otherwise specified.

### [Example 1a]

The surface of SUS316L was etched with 10.0 kg of etching solution comprising 24.6 wt% of ferric chloride (8.5 wt% in terms of trivalent iron ions) and 1.6 wt% of nickel ions, 2.3 wt% of chromium ions and 0.28 wt% of molybdenum ions in terms of metal ions from the chloride at a temperature of 45°C at a spray pressure of 0.15 Mpa. Etching treatment was carried out until the ferric chloride concentration in the etching solution was 9 wt%. As a result, 10.2 kg of etching waste liquid containing 1.8 wt% of nickel ions, 2.8 wt% of chromium ions and 0.33 wt% of molybdenum ions was obtained. 8.6 kg out of 10.2 kg of the waste liquid was oxidized with about 400 g of chlorine gas and the concentration was adjusted with water to obtain 10.0 kg of etching solution having the same composition as that of the initial etching solution, that is, comprising 24.6 wt% of ferric chloride, 1.6 wt% of nickel ions, 2.3 wt% of chromium ions and 0.28 wt% of molybdenum ions. Water was added to 1.6 kg of the excess, and then the excess was neutralized to pH 11 with a neutralizer (32% sodium hydroxide) to generate precipitate of valuable metals. The precipitate was filtered through filter paper to obtain a recovered product having a weight composition ratio of valuable metals (wt%) of iron : nickel : chromium : molybdenum = 67:13:18:2. A neutralized product was obtained containing valuable metals in a weight composition ratio equal to that of SUS316L as the material to be etched. SUS316L was etched with the etching solution regenerated above.

Ferric chloride in the etching solution and the etching waste liquid was analyzed according to JIS K 1447. The metal contents such as iron, chromium, nickel and molybdenum in the liquids were analyzed by ICP-AES (inductively coupled plasma-atomic emission spectroscopy). The metal weight composition of the recovered product was analyzed by ICP-AES after the recovered product was vacuum dried to completely remove the moisture and then redissolved in hydrochloric acid. The recovered product was powdery.

### [Example 1b]

The surface of SUS316L was etched with 10.0 kg of etching solution comprising 24.6 wt% of ferric chloride (8.5 wt% in terms of trivalent iron ions), 2 wt% of hydrochloric acid and 1.6 wt% of nickel ions, 2.3 wt% of chromium ions and 0.28 wt% of molybdenum ions in terms of metal ions from the chloride at a temperature of 45°C at a spray pressure of 0.15 MPa. Etching treatment was carried out until the ferric chloride concentration in the etching solution was 9 wt%. As a result, 10.2 kg of etching waste liquid containing 1.8 wt% of nickel ions, 2.8 wt% of chromium ions and 0.33 wt% of molybdenum ions was obtained. 8.6 kg out of 10.2 kg of the waste liquid was oxidized with about 400 g of chlorine gas and the concentration was adjusted with water and hydrochloric acid to obtain 10.0 kg of etching solution having the same composition as that of the initial etching solution, that is, comprising 24.6 wt% of ferric chloride, 2 wt% of hydrochloric acid, 1.6 wt% of nickel irons, 2.3 wt% of chromium ions and 0.28 wt% of molybdenum ions. Water was added to 1.6 kg of the excess, and then the excess was neutralized to pH 11 with a neutralizer (32% sodium hydroxide) to generate precipitate of valuable metals. The precipitate was filtered through filter paper to obtain a recovered product having a weight composition ratio of valuable metals (wt%) of iron : nickel : chromium : molybdenum = 67:13:18:2. A neutralized product was obtained containing valuable metals in a weight composition ratio equal to that of SUS316L as the material to be etched. SUS316L was etched with the etching solution regenerated above.

### [Example 2a]

SUS403 was etched with 10.0 kg of etching solution comprising 32.6 wt% of ferric chloride (11.2 wt% in terms of trivalent iron ions) and 1.5 wt% of chromium ions in terms of metal ions from the chloride at a temperature of 40°C at a spray pressure of 0.10 Mpa. Etching treatment was carried out until ferric chloride in the etching solution was it wt%. As a result, 10.2 kg of etching waste liquid containing 1.8 wt% of chromium ions was obtained. 8.6 kg out of 10.3 kg of the waste liquid was oxidized with about 400 g of chlorine gas and the concentration was adjusted with water to obtain 10.0 kg of etching solution having the same composition as that of the initial etching solution, that is, comprising 32.6 wt% of ferric chloride and 1.5 wt% of chromium ions. Water was added to 1.6 kg of the excess, and then the excess was neutralized to pH 11 with a neutralizer (32% sodium hydroxide) to generate precipitate of valuable metals. The precipitate was filtered through filter paper to obtain a recovered product having a weight composition ratio of valuable metals (wt%) of iron: chromium = 88:12. A neutralized product was obtained containing valuable metals in a weight composition ratio equal to that of SUS403 as the material to be etched.

### [Example 2b]

SUS403 was etched with 10.0 kg of etching solution comprising 32.6 wt% of ferric chloride (11.2 wt% in terms of trivalent iron ions), 3 wt% of hydrochloric acid and 1.5 wt% of chromium ions in terms of metal ions from the chloride at a temperature of 40°C at a spray pressure of 0.10 Mpa. Etching treatment was carried out until ferric chloride in the etching solution was 17 wt%. As a result, 10.2 kg of etching waste liquid containing 1.8 wt% of chromium ions was obtained. 8.6 kg out of 10.3 kg of the waste liquid was oxidized with about 400 g of chlorine gas and the concentration was adjusted with water and hydrochloric acid to obtain 10.0 kg of etching solution having the same composition as that of the initial etching solution, that is, comprising 32.6 wt% of ferric chloride, 3 wt% of hydrochloric acid and 1.5 wt% of chromium ions. Water was added to 1.6 kg of the excess, and then the excess was neutralized to pH 11 with a neutralizer (32% sodium hydroxide) to generate precipitate of valuable metals. The precipitate was filtered through filter paper to obtain a recovered product having a weight composition ratio of valuable metals (wt%) of iron : chromium = 88:12. A neutralized product was obtained containing valuable metals in a weight composition ratio equal to that of SUS403 as the material to be etched.

### [Example 3a]

SUS310S was etched with 10.0 kg of etching solution comprising 19.6 wt% of ferric chloride (6.7 wt% in terms of trivalent iron ions) and 2.5 wt% of nickel ions and 3.1 wt% of chromium ions in terms of metal ions from the chloride at a temperature of 50°C at a spray pressure of 0.2 Mpa. Etching treatment was carried out until ferric chloride in the etching solution was 9 wt%. As a result, 10.2 kg of etching waste liquid containing 2.7 wt% of nickel ions and 3.4 wt% of chromium ions was obtained. 9.2 kg out of 10.2 kg of the waste liquid was oxidized with about 300 g of chlorine gas and the concentration was adjusted with water to obtain 10.0 kg of etching solution having the same composition as that of the initial etching solution, that is, comprising 19.6 wt% of ferric chloride, 2.5 wt% of nickel ions and 3.1 wt% of chromium ions. Water was added to 1.0 kg of the excess, and then the excess was neutralized to pH 11 with a neutralizer (32% sodium hydroxide) to generate precipitate of valuable metals. The precipitate was filtered through filter paper to obtain a recovered product having a weight composition ratio of valuable metals (wt%) of iron : nickel : chromium = 55:20:25. A neutralized product was obtained containing valuable metals in a weight composition ratio equal to that of SUS310S as the material to be etched.

### [Example 3b]

SUS310S was etched with 10.0 kg of etching solution comprising 19.6 wt% of ferric chloride (6.7 wt% in terms of trivalent iron ions), 4 wt% of hydrochloric acid and 2.5 wt% of nickel ions and 3.1 wt% of chromium ions in terms of metal ions from the chloride at a temperature of 50°C at a spray pressure of 0.2 Mpa. Etching treatment was carried out until ferric chloride in the etching solution was 9 wt%. As a result, 10.2 kg of etching waste liquid containing 2.7 wt% of nickel ions and 3.4 wt% of chromium ions was obtained. 9.2 kg out of 10.2 kg of the waste liquid was oxidized with about 300 g of chlorine gas and the concentration was adjusted with water and hydrochloric acid to obtain 10.0 kg of etching solution having the same composition as that of the initial etching solution, that is, comprising 19.6 wt% of ferric chloride, 4 wt% of hydrochloric acid, 2.5 wt% of nickel ions and 3.1 wt% of chromium ions. Water was added to 1.0 kg of the excess, and then the excess was neutralized to pH 11 with a neutralizer (32% sodium hydroxide) to generate precipitate of valuable metals. The precipitate was filtered through filter paper to obtain a recovered product having a weight composition ratio of valuable metals (wt%) of iron : nickel : chromium = 55:20:25. A neutralized product was obtained containing valuable metals in a weight composition ratio equal to that of SUS310S as the material to be etched.

### [Example 4]

A regenerated etching solution and a neutralized product containing valuable metals were obtained in the same manner as in Example 1, except that the pH in the neutralization treatment was 10.5. SUS316 was etched with the resulting regenerated etching solution. No problem occurred in efficiency of the etching treatment and the production of the neutralized product containing valuable metals even when the step of obtaining a regenerated etching solution and the step of etching SUS316 with the regenerated etching solution were repeated.

### [Example 5]

A regenerated etching solution and a neutralized product containing valuable metals were obtained in the same manner as in Example 2, except that the pH in the neutralization treatment was 10.5. SUS403 was etched with the resulting regenerated etching solution. No problem occurred in efficiency of the etching treatment and the production of the neutralized product containing valuable metals even when the step of obtaining a regenerated etching solution and the step of etching with the regenerated etching solution were repeated.

### [Example 6]

A regenerated etching solution and a neutralized product containing valuable metals were obtained in the same manner as in Example 3, except that the pH in the neutralization treatment was 10.5. SUS310S was etched with the resulting regenerated etching solution. No problem occurred in efficiency of the etching treatment and the production of the neutralized product containing valuable metals even when the step of obtaining a regenerated etching solution and the step of etching with the regenerated etching solution were repeated.

### [Example 7a]

The surface of a 36 Ni invar alloy was etched with 10.0 kg of an iron-nickel alloy etching solution comprising 25.9 wt% of ferric chloride (8.9 wt% in terms of trivalent iron ions) and 5.0 wt% of nickel ions from the chloride at etching solution temperature of 50°C at a spray pressure of 0.2 Mpa. Etching treatment was carried out until the ferric chloride concentration in the etching solution was 11 wt%. As a result, 10.3 kg of etching waste liquid containing 5.8 wt% of nickel ions was obtained. 8.6 kg out of 10.3 kg of the waste liquid was oxidized with chlorine gas and the concentration was adjusted with water to obtain 10.0 kg of etching solution having the same composition as that of the initial etching solution, that is, comprising 25.9 wt% of ferric chloride and 5.0 wt% of nickel ions. Water was added to 1.7 kg of the excess, and then the excess was neutralized to pH 11 with a neutralizer (32% sodium hydroxide) to generate precipitate of valuable mentals. The precipitate was filtered through fiter paper to obtain a recovered product having a weight composition ratio of metal content (wt%) of iron : nickel = 64:36. A neutralized product was obtained containing valuable metals in a weight composition ratio equal to that of the invar alloy as the material to be etched.

### [Example 7b]

The surface of a 36 Ni invar alloy was etched with 10.0 kg of an iron-nickel alloy etching solution comprising 25.9 wt% of ferric chloride (8.9 wt% in terms of trivalent iron ions), 1 wt% of hydrochloric acid and 5.0 wt% of nickel ions from the chloride at etching solution temperature of 50°C at a spray pressure of 0.2 Mpa. Etching treatment was carried out until the ferric chloride concentration in the etching solution was 11 wt%. As a result, 10.3 kg of etching waste liquid containing 5.8 wt% of nickel ions was obtained. 8.6 kg out of 10.3 kg of the waste liquid was oxidized with chlorine gas and the concentration was adjusted with water and hydrochloric acid to obtain 10.0 kg of etching solution having the same composition as that of the initial etching solution, that is, comprising 25.9 wt% of ferric chloride, 1 wt% of hydrochloric acid and 5.0 wt% of nickel ions. Water was added to 1.7 kg of the excess, and then the excess was neutralized to pH 11 with a neutralizer (32% sodium hydroxide) to generate precipitate of valuable metals. The precipitate was filtered through filter paper to obtain a recovered product having a weight composition ratio of metal content (wt%) of iron : nickel = 64:36. A neutralized product was obtained containing valuable metals in a weight composition ratio equal to that of the invar alloy as the maternal to be etched.

### Industrial Applicability

As described above, as a waste liquid of a conventional etching solution is regenerated, the amount of the regenerated solution is considerably increased and the increased portion must be disposed of. However, in the present invention, since heavy metal removal treatment is not necessary for regenerating a waste liquid, the regenerated solution does not have to be disposed of and is easily recycled. In addition, since a composition ratio of metal ions contained in the etching solution is approximately equal to a composition ratio in alloy steel to be etched, heavy metals present in the waste liquid can be recycled as raw material valuable metals for alloy steel. The present invention employs etching solution which reduces the amount of waste and is easily recycled, as described above, and is therefore an invention having high industrial applicability.

## Claims

1. Etching solution comprising ferric chloride and chromium ions or nickel ions and comprising each type of metal ions in a metal composition ratio approximately equal to a metal composition ratio in alloy steel to be etched.

2. Etching solution comprising ferric chloride and chromium, ions or nickel ions.

3. The etching solution according to claim 1 or 2, comprising 50 to 90 wt% of iron ions and 10 to 50 wt% of chromium ions based on a total amount of the trivalent iron ions based on the ferric chloride and the chromium ions.

4. The etching solution according to claim 1 or 2, comprising 50 to 90 wt% of iron ions and 10 to 50 wt% of nickel ions based on a total amount of the trivalent iron ions basted on the ferric chloride and the nickel ions.

5. Etching solution comprising ferric chloride, chromium ions and nickel ions.

6. Etching solution comprising ferric chloride, chromium ions and nickel ions and comprising each type of metal ions in a metal composition ratio approximately equal to a metal composition ratio in alloy steel to be etched.

7. The etching solution according to claim 5 or 6, comprising 50 to 90 wt% of iron ions, at least 7 wt% each of chromium ions and nickel ions and comprising 10 to 50 wt% of chromium ions and nickel ions in total based on a total amount of the trivalent iron ions based on ferric chloride, the chromium ions and the nickel ions.

8. The etching solution according to any one of claims 1 to 7, further comprising molybdenum ions.

9. The etching solution according to any one of claims 1 to 8, further comprising hydrochloric acid.

10. A method for etching alloy steel with the etching solution according to any one of claims 1 to 9.

11. A method for etching alloy steel with etching solution comprising ferric chloride and comprising each type of metal ions in a metal composition ratio approximately equal to a metal composition ratio in the alloy steel.

12. The etching method according to claim 11, wherein the etching solution further comprises hydrochloric acid.

13. A method for regenerating etching waste liquid, comprising oxidizing ferrous chloride present in a waste liquid of the etching solution according to any one of claims 1 to 9 to ferric chloride with chlorine or hydrogen peroxide.

14. A method for recovering valuable metals from etching waste liquid, comprising adding a neutralizer to a waste liquid of the etching solution according to any one of claims 1 to 9 to precipitate valuable metals and filtering the valuable metals.

15. A method for recovering valuable metals from etching waste liquid and regenerating the etching waste liquid, comprising adding a neutralizer to a part of a waste liquid of the etching solution according to any one of claims 1 to 9 to precipitate valuable metals and filtering the valuable metals, and oxidizing ferrous chloride present in the remaining part of the waste liquid of the etching solution to ferric chloride with chlorine or hydrogen peroxide.

16. The method for recovering valuable metals from etching waste liquid and regenerating the etching waste liquid according to claim 15, further comprising adding hydrochloric acid to the remaining part of the waste liquid of the etching solution and/or the etching solution after oxidizing the remaining part of the waste liquid.
